# EUROPEAN PATENT SPECIFICATION

(11) **EP 0 483 506 B1**
(45) Date of publication and mention of the grant of the patent: **30.07.1997**
(21) Application number: 91116260.0
(22) Date of filing: 24.09.1991
(51) Int. Cl.: C12M 1/26, G01N 1/30

(54) **Automated pap test method and device**
Automatisches Pap-Test-Verfahren und Gerät
Méthode et appareil pour essai de pap automatisé

(30) Priority: 25.09.1990 US 587964
(43) Date of publication of application: 06.05.1992
(73) Proprietor: MICROBYX CORPORATION, New Canaan, Connecticut 06840 (US)
(72) Inventor: Andresen, John A., New Canaan, Connecticut 06840 (US)
(74) Representative: Kinzebach, Werner, Dr.

(56) References cited:
- EP-A- 088 971
- DE-A- 2 800 171

## Description

The present invention relates to a method of performing the Pap analysis of a menstrual blood specimen as well as a device for performing said analysis.

### BACKGROUND OF THE INVENTION

The current Pap Test requires the gynecologist to take a specimen by scraping or smear from the cervix, using a spatula or swab and rubbing the material onto a slide. The slide is sprayed with a fixative to preserve the specimen and is then transported to the lab. The specimen is then placed into a slide holder (along with many other slides - as many as twenty or more, and from many other patients, and dipped either by hand or by automatic dipping machine into the various Pap Test solutions (approximately 18) each of which is contained in its own vessel. The vessels used are small, usually glass, usually rectangular tubs.

During this process, cells fall or float off each patient's slide and settle to the bottom of the vessel and/or stick to other patient's slides. After several sets of slides have been dipped into a vessel, a layer of specimen material, including cells, may be found at the bottom of the vessel. Moreover, with each dipping, the composition of the solution in each vessel is changed by carry over of solution from the preceding vessel and by material floating or falling off the slides.

This overall procedure is time consuming and can be wrought with many inaccuracies resulting from the above steps which cause variable output in terms of stained slide, with each set of slides also differing from each other in terms of staining.

US Patent No. 3 867 924 (reissued on December 7, 1976; RE. 29,061) describes a method for collecting and analyzing blood by introducing into a cavity of the person, for example the vagina in the case of a woman, a device which has an interior capable of receiving and holding blood which is present in the cavity. For example, the device may be a tampon inserted by a woman into the vagina for collecting the blood during menstrual flow. The blood thus collected can be subjected to analysis, for example Pap Test analysis.

The method and device for collecting blood as set forth in Patent No. RE. 29,061 provides greater accuracy for analysis than does the ordinary Pap smear or scrapping test. However, the very simplicity of the method and device of Patent No. RE. 29,061 leads to the problem of a need for more rapid and possibly automated analysis because the method and device do not require the gynecologist, and the laboratories could be flooded with collections requiring analysis. Still further, greater accuracy of analysis is required because of the large number of collections obtained for analysis.

DE-OS 2800171 describes a method and a device for isolation and investigation of cells, for example cells enclosed in a body fluid sample. The device comprises a cylindrical container provided with openings at the two ends. One of the ends is provided with a filter and in the opposite end a piston is inserted, by means of which the container may be charged with washing and staining solutions. The piston may be replaced by a suction device. After the end of the washing and staining procedure the cells retained in the filter can be transferred onto a slide for cytological analysis.

EP-A-0 088 971 describes a device for analyzing bacteria, fungi or viruses in a blood specimen. For this purpose, a cylindrical container is filled with an adsorbent which is charged with the blood sample to be analyzed. Bacteria, fungi or viruses will be bound to the adsorbent while blood cells and other constituents of the sample can be eluted from the adsorbent. One of the ends of said cylindrical device is equipped with a filter secured therein. The opposite end of the device is equipped with a movable piston provided with a second filter. By means of this piston a controlled discharge and transfer of the adsorbent into culture dishes for cultivating the adsorbed microorganisms is possible.

### SUMMARY OF THE INVENTION

It is accordingly a primary object of the present invention to provide a method for rapid and accurate analysis of blood, particularly blood collected by tampons and the like during menstrual flow.

It is another object of the present invention to provide a device for receiving a tampon or the like containing menstrual blood flow for rapid and accurate treatment in a device in which all of the stages of a Pap Test can be carried out up to the point of analysis of cells deposited on a glass slide.

It is yet another object of the present invention to provide a device for sequential contact with Pap solutions for rapid and accurate analysis of cells.

Other objects and advantages of the present invention will be apparent, from a reading of the specification and of the appended claims.

With the above and other objects in view, the present invention mainly comprises a method of analysis of menstrual blood flow wherein menstrual blood collected by a tampon or the like, which blood would include cells of clinical interest, is deposited in a container provided with filters at each end having a pore size of 5-12 µm such that all cells of clinical interest in the blood specimen cannot pass through the filters while cells which are not of clinical interest, for example red and white blood cells are small enough to pass through the filter; subjecting the menstrual blood in the container to washings and back washings, for example with saline solution or balanced salt solution, e.g. Ringer's solutions; and further subjecting the suspended cells to the approximately 18 Pap solutions after which the cells remaining in the container are deposited on a glass slide and analyzed by the cytologist. The analysis can be by way of standard slide examination or utilizing computers.

Thus, according to one aspect the present invention provides a method of Pap analysis which comprises introducing a collected menstrual blood specimen into a container provided with filters at each end having 5-12 µm pore size sufficiently large to permit cells which are not of clinical interest to pass through the same while being sufficiently small to prevent cells of clinical interest from passing through the same, subjecting the thus collected specimen to washings by one way passage through the filters to remove blood, mucous and other cells not of clinical interest from the container while retaining cells of clinical interest on a filter, subjecting the cells collected on the filter to Pap solutions and subjecting the thus Pap solution treated cells to analysis by a cytologist on a slide or by computer analysis.

The filter used in the container of the invention is preferably a 12-µm pore size filter. Cells of clinical interest are substantially larger than 25 µm and cannot go through the pores of the filter. On the other hand, the cells that are not of clinical interest, for example red and white blood cells which have a size of about 7 µm, are small enough to go through the filter pores and are removed from the specimen along with the blood plasma. This is accomplished by repeated washings and back washings.

Although 12-µm pore filters are preferred, it is possible to use filters in the range of 5-12 µm. When filters of 5-8 µm size are used, 7-µm red blood cells and 12-µm white blood cells can still be forced through the filters by pressure.

This same container, which now contains only the cells of clinical interest is then subjected to the approximately 18 Pap solutions which are generally sequentially introduced into the container in an amount to fill the same, then removed until the final cells are stained in accordance with the Pap process, after which the cells are evenly deposited on a glass slide with or without a filter.

By proceeding in accordance with this method, cells of clinical interest in any specimen are entrapped because these cells cannot enter or leave, so that there is no loss or gain of cells of clinical interest. All other cells and fluids are washed out so that at the end only a clean suspension of cells of clinical interest is obtained which cells are processed through the Pap solutions, in suspension, reducing overall time, increasing quality and resulting in uniformity of analysis. The overall process results in a saving in labor, materials, time, and of course therefore in costs.

The increased quality and greater uniformity of test results by proceeding in accordance with the method of the present invention are achieved as a result of many advantages derived from proceeding in accordance with the method of the invention.

Thus, for example, the washings and Pap solutions used according to the present invention cannot result in either the loss of cells of clinical interest or the contamination of the cells in the container by another patient's cells. Thus, cells of clinical interest cannot get in or out of the container and other cells cannot get into the container.

The time required for cell contact of the cells with the various Pap solutions is substantially reduced as compared to proceeding in accordance with the normal Pap procedure because the cells are in suspension rather than being flat on a slide. Furthermore, the amount of solution is greatly reduced since only a few ml of solution are required to fill the container.

In accordance with the method of the invention, fresh solution is used each time with the solution sent to drain after each use, so that each specimen is stained in the same consistent way. Furthermore, at the end of the Pap process, the cells are evenly deposited on a glass slide, with or without the filter.

The general procedure according to the present invention is as follows:

The tampon used during menstrual flow, after removal from the woman, is placed in a vial containing fixative solution. The vial is sealed and transported to the laboratory. At the laboratory the vial is shaken, inverted, swirled, or mildly sonicated to move cells from the tampon into the fixative solution and to create a cell suspension in the fixative solution. The tampon is removed and discarded.

The cell suspension is poured into a disposable plastic syringe with a filter holder containing a 5-12 µm pore filter, preferably a 12 µm pore filter. The cells are washed by passing solutions through the filter until the blood and mucous have been removed. After the last washing, the cells are subjected to the standard Pap solutions, left on the filter and the filter is clipped to a glass slide and analyzed by the cytologist.

For large scale analyses the procedure is as follows:

Each of the tampons is inserted into a separate vial containing fixative solution and the vials are placed into machines which mildly sonicate the same to move cells from the the tampon into the fixative solution and to create a cell suspension in the fixative solution. The cell suspension is aspirated by the machine into a modified disposable plastic syringe with a filter holder containing a 12 µm filter. The vial and tampon are removed and discarded by the machine.

The machine automatically works the modified disposable plastic syringe to wash and backwash the cells until the blood and mucous have been removed. The machine then automatically moves the modified disposable plastic syringe to expose the cells sequentially to each and all of the solutions used in the standard Pap method. This can be done either by moving the syringe to each solution in turn, or by moving each solution in turn to the syringe. In either case, a solution is used once and then sent to drain.

After the standard Pap method treatment has been completed, the machine can either place the filter on a glass slide or centrifuge the cells onto a glass slide. In either case, the cells are ready to be read by the cytologist without ever having been touched by any hands, completely automatically.

In accordance with another embodiment, the cell suspension after the standard Pap Test has been completed is introduced into a currently commercially available cell counter/sorter (laser microscope) which reads the cells, separates abnormal and suspicious cells, and puts them on a slide for the cytologist. The machine also prints out a report. This possibility does not exist in the case of the ordinary Pap Smear test because it is not possible by such test to obtain a sufficient number of cells in suspensions. This is only possible with the collection of menstrual blood by a tampon or the like and by proceeding as set forth herein.

According to another aspect of the invention a device for performing the above Pap analysis is provided, comprising a container with openings at two ends, filters secured in said container at the two ends thereof, said filters having 5-12 µm pore size sufficiently small to prevent passage through the same of cells of clinical interest for Pap analysis while being sufficiently large to permit cells not of such clinical interest to pass through the same, and means for passing washing fluid through the filters for washing out cells not of clinical interest.

This device may include means for controlling fluid flow through the filters and means for closing and opening the openings at the ends of the container for the washing of the specimen contained in the same and removal of fluid and cells not of clinical interest through the filter.

### BRIEF DESCRIPTION OF THE DRAWINGS

The invention is illustrated by way of example in the accompanying drawings which form part of this invention and in which:
Fig. 1 is a schematic illustration of a device of the invention in which a vial or cylinder is provided with two filters;
Fig. 2 is a schematic illustration of a device for sonicating specimens in the original collection container; and
Fig. 3 is a schematic illustration of a device wherein liquids used in processing the cells are controlled by valves.

### DESCRIPTION OF THE PREFERRED EMBODIMENTS

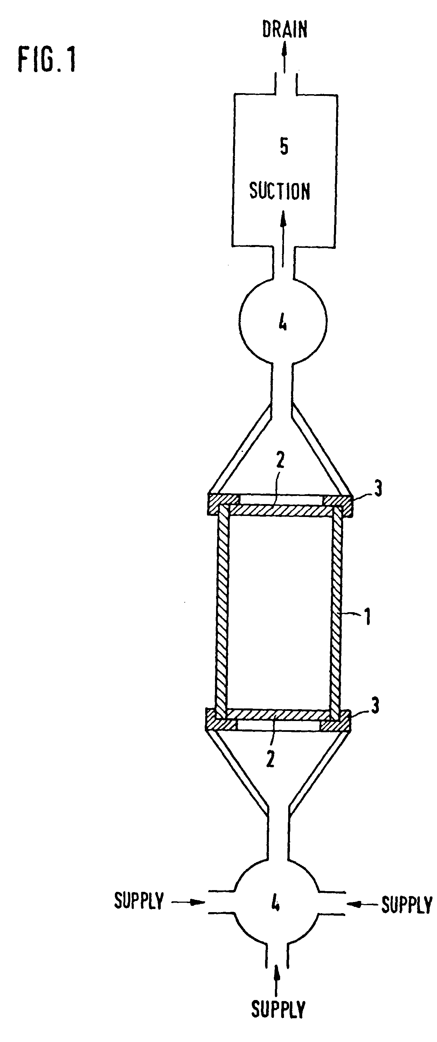

Fig. 1 illustrates a cylinder 1 provided with two filters, 2, one at each end of the cylinder, each held by a filter holder ring 3. Pump 5 provides suction for drawing the treating liquid in one direction through the filters 2 with valves 4 opening and closing as needed.

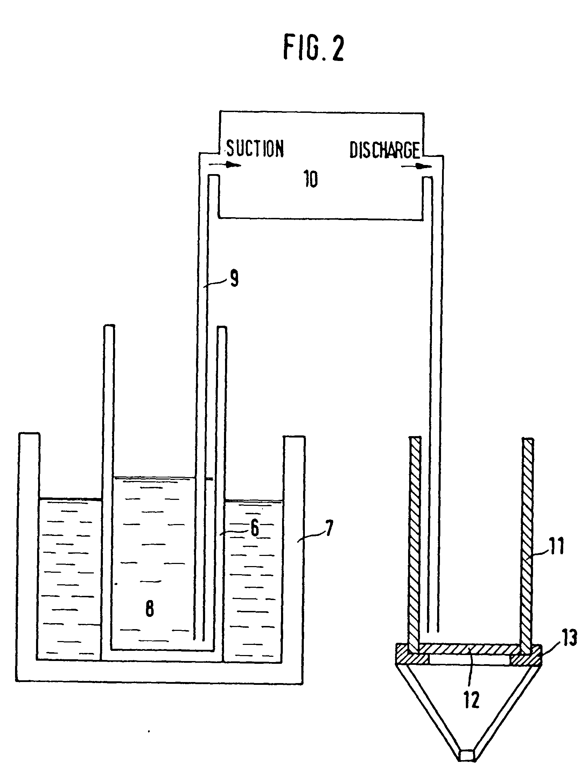

As illustrated in Fig. 2, a collection container 6 containing the specimen 8 is sonicated by means of sonicator 7 to move the cells into suspension in the treating liquid. By means of aspirator 9 and pump 10 the liquid 8 containing the suspended cells is aspirated, with the aid of pump 10 into cylinder 11 provided with a filter 12 which is held by filter holder ring 13. The thus aspirated suspended specimen is then subjected to treatment with the Pap solutions.

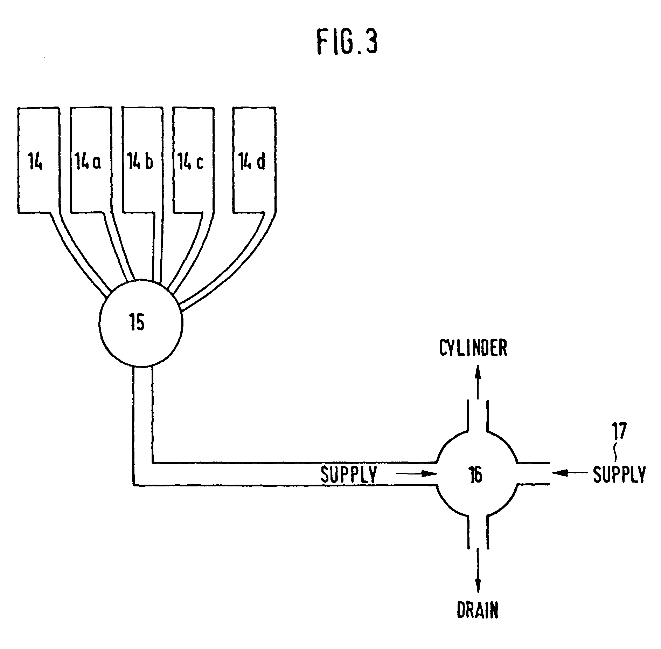

As illustrated in the embodiment of Fig. 3, reservoirs 14, 14a, 14b, etc., each containing a different Pap solution used in the Pap method are alternately supplied by means of control valves 15 and 16 to the cylinder for treatment of the cells therein. Each liquid, alcohol, stain, etc., is passed into the cylinder and then withdrawn from the cylinder. Supply 17 illustrates the possibility of various treating solutions entering the system from a different entrance.

In carrying out the method of the present invention, the tampon after removal from the woman is placed into a vial containing a fixative solution. The fixative is used in cytology to maintain the existing form and structure of the cells, particularly the nuclear detail. The fixative solution may be, for example, 10% neutral buffered formalin or dilute methyl or ethyl alcohol, or it may be a mixture of alcohol and wax, which forms a thin, protective coating over the cells and preserves the same until they are processed in the cytology laboratory.

At the laboratory, the vial containing the tampon in the fixitive solution is shaken or sonicated to create a cell suspension in the solution. The tampon is removed and discarded.

The cell suspension is introduced into the disposable plastic syringe provided with a filter holder containing a 5-12 µm filter, preferably 12-µm filter. The cells are washed until blood and mucous have been removed leaving only the cells of clinical interest on the filter. These cells are then subjected to the Pap stain solutions for visualization of cellular changes. The stain is basically composed of a blue nucleus stain and orange, red, and green cytoplasmic counter stains. The nuclear stain demonstrates the chromatin patterns associated with normal and abnormal cells, while the cytoplasmic stains help to indicate cell origin. The cells are generally subjected to about 18 or more different staining solutions, after which the filter is placed up on a glass slide or the cells are centrifuged onto the glass slide, after which the cytologist can read the slide.

While normal pap testing provides only about ninety percent accuracy, the above method provides accuracy approaching one hundred percent.

## Claims

1. Method of Pap analysis which comprises introducing a collected menstrual blood specimen into a container provided with filters at each end having 5-12 µm pore size sufficiently large to permit cells which are not of clinical interest to pass through the same while being sufficiently small to prevent cells of clinical interest from passing through the same, subjecting the thus collected specimen to washings by one way passage through the filters to remove blood, mucous and other cells not of clinical interest from the container while retaining cells of clinical interest on a filter, subjecting the cells collected on the filter to Pap solutions and subjecting the thus Pap solution treated cells to analysis by a cytologist on a slide or by computer analysis.

2. Method according to claim 1, wherein said filter has 12 µm pore size.

3. Method according to claim 1 or 2, wherein collected menstrual blood is contacted with a fixative solution, the fixative solution and menstrual blood are shaken or sonicated to suspend cells from the blood specimen in the fixative solution, the thus obtained fixative solution containing suspended cells is introduced into the container provided with the filters after which the washings and Pap solution treatment steps proceed.

4. Method according to claim 3, wherein the menstrual blood is collected by means of a tampon which is introduced into the fixative solution and after shaking or sonication to suspend the cells in the fixative solution the tampon is removed and discarded.

5. Method according to claims 1-4, wherein the container containing the filter with cells of clinical interest thereon is sequentially filled and emptied with each of the Pap solutions for staining the cells in a manner such as to permit cytological examination thereof.

6. Method according to claim 3, wherein the menstrual blood is collected by means of a tampon which is introduced into a container containing the fixative solution, the container is shaken or sonicated whereby the cells from the mestrual blood become suspended in the fixative solution, and the thus obtained cell suspension and fixative solution is aspirated into the container provided with the filter.

7. Device for performing Pap analysis, as defined by any one of claims 1 to 6 comprising:
a container provided with openings at two ends,
filters secured in said container at the two ends thereof, said filters having 5-12 µm pore size sufficiently small to prevent passage through the same of cells of clinical interest for Pap analysis while being sufficiently large to permit cells not of such clinical interest to pass through the same, and
means for passing washing fluid through the filters for washing out cells not of clinical interest.

8. Device according to claim 7 and including means for controlling fluid flow through the filters and means for closing and opening the openings at the ends of the container for the washing of the specimen contained in the same and removal of fluid and cells not of clinical interest through the filter.

## Patentansprüche

1. Verfahren zur Pap-Analyse, wobei man eine gesammelte Menstruationsblutprobe in einen Behälter einführt, der mit Filtern an jedem Ende ausgerüstet ist, die eine Porengröße von 5-12 µm aufweisen, die ausreichend groß ist, um Zellen, die nicht von klinischem Interesse sind, den Durchtritt zu gestatten, und ausreichend klein ist, um den Durchtritt von Zellen von klinischem Interesse zu verhindern, die auf diese Weise gesammelte Probe Spülungen in einer Richtung durch die Filter unterzieht, um Blut, Schleim- und andere Zellen, die nicht von klinischem Interesse sind, aus dem Behälter zu entfernen, während Zellen von klinischem Interesse an einem Filter zurückgehalten werden, die isolierten Zellen auf dem Filter mit Pap-Lösungen versetzt und die auf diese Weise mit Pap-Lösung behandelten Zellen auf einem Träger einer Analyse durch einen Zytologen oder einer Computeranalyse unterzieht.

2. Verfahren nach Anspruch 1, wobei der Filter eine Porengröße von 12 µm besitzt.

3. Verfahren nach Anspruch 1 oder 2, wobei das gesammelte Menstruationsblut mit einer Fixierungslösung in Kontakt gebracht wird, die Fixierungslösung und das Menstruationsblut geschüttelt oder beschallt werden, um Zellen aus der Blutprobe in der Fixierungslösung zu suspendieren, die auf diese Weise erhaltene, die suspendierten Zellen enthaltende Fixierungslösung in den mit den Filtern versehenen Behälter eingeführt wird und anschließend die Spülungen und die Behandlung mit Pap-Lösung durchgeführt werden.

4. Verfahren nach Anspruch 3, wobei das Menstruationsblut mit Hilfe eines Tampons gesammelt wird, welches in die Fixierungslösung eingeführt wird und nach Schütteln oder Beschallen, um die Zellen in der Fixierungslösung zu suspendieren, das Tampon entfernt und verworfen wird.

5. Verfahren nach einem der Ansprüche 1 bis 4, wobei der Behälter, der den Filter mit den darauf befindlichen Zellen von klinischem Interesse enthält, nacheinander mit jeder der Pap-Lösungen zum Anfärben der Zellen befüllt und wieder entleert wird, so daß deren zytologische Untersuchung ermöglicht wird.

6. Verfahren nach Anspruch 3, wobei das Menstruationsblut mit Hilfe eines Tampons gesammelt wird, das in einen Behälter eingeführt wird, der die Fixierungslösung enthält, der Behälter geschüttelt oder beschallt wird, um die Zellen aus dem Menstruationsblut in der Fixierungslösung zu suspendieren, und die auf diese Weise erhaltene Zellsuspension und Fixierungslösung in den Behälter gesaugt wird, der mit dem Filter versehen ist.

7. Vorrichtung zur Durchführung der Pap-Analyse gemäß der Definition in einem der Ansprüche 1 bis 6, umfassend:
einen Behälter, der mit Öffnungen an beiden Enden versehen ist,
in den Behälter an dessen beiden Enden befestigte Filter, wobei die Filter eine Porengröße von 5-12 µm besitzen, die ausreichend klein ist, um den Durchgang von Zellen von klinischem Interesse für die Pap-Analyse zu verhindern, und gleichzeitig ausreichend groß ist, um den Durchgang von Zellen zu gestatten, die nicht von klinischem Interesse sind, und
Mittel, um Waschflüssigkeit durch die Filter durchzuleiten, um Zellen auszuwaschen, die nicht von klinischem Interesse sind.

8. Vorrichtung nach Anspruch 7, enthaltend Mittel zur Durchflußkontrolle von Flüssigkeit durch die Filter und Mittel, um die Öffnungen an den Enden des Behälters zum Waschen der darin enthaltenen Probe zu öffnen und zu schließen und um Flüssigkeit und Zellen, die nicht von klinischem Interesse sind, durch den Filter zu entfernen.

## Revendications

1. Méthode pour l'analyse de Pap qui comprend l'introduction d'un échantillon de sang menstruel collecté dans un conteneur pourvu de filtres à chaque extrémité ayant une grandeur des pores de 5-12 µm suffisamment importante pour permettre aux cellules qui n'ont pas d'intérêt clinique de passer à travers eux, tout en étant suffisamment petits pour empêcher les cellules d'un intérêt clinique de passer à travers eux, la soumission du spécimen ainsi collecté à des lavages par un passage à une voie à travers les filtres pour éliminer le sang, les muqueuses et autres cellules qui ne présentent pas d'intérêt clinique, du conteneur, tout en retenant les cellules d'un intérêt clinique sur un filtre, la soumission de cellules collectées sur le filtre à des solutions de Pap et la soumission de cellules ainsi traitées à la solution de Pap a une analyse par un cytologue sur une lamelle ou à une analyse par ordinateur.

2. Méthode selon la revendication 1 où ledit filtre a une grandeur des pores de 12 µm.

3. Méthode selon la revendication 1 ou 2 où le sang menstruel est collecté et mis en contact avec une solution fixative, la solution fixative et le sang menstruel sont secoués ou soniqués pour mettre les cellules en suspension de l'échantillon de sang dans la solution fixative, la solution fixative ainsi obtenue contenant les cellules en suspension est introduite dans le conteneur pourvu des filtres et ensuite les étapes de lavage et de traitement avec la solution de Pap se passent.

4. Méthode selon la revendication 3 où le sang menstruel est collecté au moyen d'un tampon qui est introduit dans la solution fixative et après secousses ou sonication pour mettre les cellules en suspension dans la solution fixative, le tampon est retiré et jeté.

5. Méthode selon les revendications 1-4 où le conteneur contenant le filtre avec les cellules d'un intérêt clinique est séquentiellement rempli et vidé avec chacune des solutions de Pap pour teinter les cellules d'une manière telle que cela permette un examen cytologique.

6. Méthode selon la revendication 3 où le sang menstruel est collecté au moyen d'un tampon qui est introduit dans un conteneur contenant la solution fixative, le conteneur est secoué ou soniqué et ainsi les cellules du sang menstruel se trouvent en suspension dans la solution fixative et la suspension ainsi obtenue des cellules et la solution fixative est aspirée dans le conteneur pourvu du filtre.

7. Dispositif pour accomplir une analyse de Pap telle que définie par l'une des revendications 1 à 6, comprenant :
un conteneur pourvu d'ouvertures aux deux extrémités,
des filtres fixés dans ledit conteneur à ses deux extrémités, lesdits filtres ayant une grandeur des pores de 5-12 µm, suffisamment petite pour empêcher le passage à travers ceux-ci des cellules d'un intérêt clinique pour une analyse de Pap tout en étant suffisamment grands pour permettre aux cellules ne présentant pas un intérêt clinique de passer à travers ceux-ci,
un moyen pour faire passer un fluide de lavage à travers le filtre pour enlever en lavant les cellules qui ne présentent pas un intérêt clinique.

8. Dispositif selon la revendication 7 comprenant un moyen pour contrôler l'écoulement du fluide à travers les filtres et un moyen pour fermer et ouvrir les ouvertures aux extrémités du conteneur pour le lavage du spécimen qui y est contenu et l'élimination du fluide et des cellules ne présentant pas d'intérêt clinique à travers le filtre.
